Europäisches Patentamt

(19) European Patent Office

Office européen des brevets

(11) Publication number: **0 067 621**
**A2**

# (12) EUROPEAN PATENT APPLICATION

(21) Application number: **82302841.0**

(22) Date of filing: **02.06.82**

(51) Int. Cl.³: **D 06 H 5/00**
**C 09 J 7/02, B 29 C 27/00**

(30) Priority: **16.06.81 GB 8118457**

(43) Date of publication of application:
**22.12.82 Bulletin 82/51**

(84) Designated Contracting States:
**DE FR GB**

(71) Applicant: **BRINTONS LIMITED**
**Exchange Street P.O. Box 16**
**Kidderminister Worcestershire DY10 1AG(GB)**

(72) Inventor: **Clist, Julian Reginald Brinton**
**Woodbury Old Farm**
**Shelsley Beauchamp Worcestershire(GB)**

(74) Representative: **Jennings, Guy Kenneth et al,**
**GILL JENNINGS & EVERY 53/64 Chancery Lane**
**London WC2A 1HN(GB)**

(54) Jointing fabrics.

(57) A tape 1 comprising a fibrous reinforcement, a layer of adhesive which can be activated by heat and a strip of metallic foil is heated by the passage of an electric current through the foil so as to activate the adhesive and is then pressed into contact with two pieces of fabric to be joined. The electric current passes along two conductors 4 from a power unit 3 supplied by a source 2 and is caused to flow for a length of time which is controlled in accordance with the average temperature reached by the foil as computed by a micro-processor 8 from the variation of its electrical resistance derived from the potential drop across its ends for a predetermined current flow, tapped off by conductors 5. When the average temperature approaches a value corresponding to full activation of the adhesive, an indication is provided to the operator by an indicator 9 and then, after an interval of time sufficient to allow the operator to press the tape against the joint between the two pieces of fabric, as measured by a timer 10, the current is automatically switched off by the microprocessor 8.

GJE/181/46

BRINTONS LIMITED

- 1 -

Jointing fabrics

This invention relates to the jointing of sheets of fabric by means of the use of an adhesive bonding tape.    It is particularly concerned with the joining together of pieces of carpet and will therefore be described in this connection although of broader, general application.

One effective way of making a joint between pieces of carpet as described in British patent specification no: 1,328,346, is by use of a tape which, in addition to a fibrous reinforcement, also includes a strip of metallic foil and a layer of adhesive which can be activated by heat.   After a length of tape has been placed in position along a joint to be made, an electric current is passed through the metallic foil, thus heating the assembly and activating the adhesive.   The tape is then pressed into firm contact with each of the two pieces of carpet and the current is switched off to allow the adhesive to cool.   The adhesive itself may be either of the thermoplastic hot melt type or of a type, including various epoxy resins, which are first activated and then subsequently cured by the application of heat.

It is important that the flow of electric current should be maintained until the adhesive is fully activated and then for a further short period while the adhesive tape is being pressed against the carpet to complete the joint. For any particular construction of tape, i.e. depending on the nature of the adhesive used and also the cross section and electrical resistance of the metal foil, the time during which the electric current must flow will vary with the length of the joint, i.e. the length of tape used and also with the magnitude of the current itself. Although for any particular current, the length of time during which this current should flow for any particular length of tape can be determined empirically, this is not very satisfactory since the time also depends on a number of external factors such as the ambient temperature and the nature of the carpet being joined since this will affect the flow of heat away from the tape. The position is complicated by the fact that the adhesive usually used has no clear cut melt point which makes visual judgement difficult while the temperature band between adequate melting and damage to carpet fibres, particularly of the man-made variety, is narrow.

In theory, the empirical approach could be improved upon by the inclusion of temperature sensors at intervals along the joint so that the average temperature could be measured and the duration of the current flow controlled accordingly. In practice, however, any attempt to use such sensors gives rise to further problems. For example, if the sensors are inserted through the joint itself, they are irretrievably lost in the adhesive and tend to produce hard spots in the carpet. On the other hand, attempts to locate the sensors on the underside of the tape are rendered almost impossible by the difficulty of access and, in any case, there is a risk of damage of the sensors by the heavy roller which is necessary in order to press the tape against the pieces of carpet being joined.

The present invention is based on the realisation that the electrical resistance of the metal foil included in the tape will increase with temperature and that measurement of this increase will thus provide a measure of the temperature rise. Thus, according to the invention, electric current is caused to flow along the metallic foil for a length of time which is controlled in accordance with the average temperature reached by the foil as computed from the variation of its electrical resistance. Preferably, when the average temperature approaches a value corresponding to full activation of the adhesive, an indication is provided to the operator who can then proceed to press the tape against the joint in the usual way and then, after an interval of time sufficient to allow this pressing operation to be completed, the current is automatically switched off.

Since it is the variation of the electrical resistance which is measured, this is independent of the length of tape used and there is no need to use any empirical relationship to determine the appropriate length of time for any particular length of tape. It may, for example, be convenient to use a standard value of heating current and the automatic control then varies the duration of this current in accordance with the length of the joint.

Although in theory a form of proportional current control could be used, e.g. a reduction of the current when the activation temperature of the adhesive is reached, it is found in practice that a simple on - off control is quite adequate and that a constant heating current may be maintained throughout both during the initial heating period and during the period immediately prior to the current being interrupted when the adhesive tape is being pressed against the carpet to complete the joint.

When using a standard, predetermined current, the potential difference necessary to maintain that current will vary with the electrical resistance of the foil and the resistance may therefore be computed directly from the potential drop. For this purpose, the potential drop may be measured by a separate pair of non-current-carrying conductors connected to the main current conductors.

Under some circumstances, particularly with very long joints, the resistance of the foil may be so great as to prevent the power source from delivering the full standard current and if the full-rated power output is used, the current will tend to decrease as the resistance rises with temperature. If the resistance were to be computed on the basis of the standard current this would then lead to an incorrect result. Under these circumstances, therefore, the value of the current may be reduced to a lower, predetermined value at pre-set frequent intervals of short duration and the electrical resistance of the tape is computed from the potential drop during each interval. In other words, the resistance will still be computed from the potential drop, but this will not be the full value which is applicable under normal circumstances.

The heating of the carpet during the formation of the joint or seam tends to dry out the carpet and, particularly on plain carpets, over-rapid drying can affect colour and appearance in the immediate area of the seam. As a refinement therefore, the heating current can be controlled in such a way as to introduce a dwell in the heating for a predetermined period at a reduced temperature to control the dispersion of moisture and eliminate or at least greatly reduce the effect just mentioned.

Preferably a micro-processor is used to control the heating current in accordance with the different variables involved. Thus the temperature of the tape may be computed from the percentage variation of the electrical resistance while taking into account the ambient temperature. The computed temperature will also depend on the temperature co-efficient of the metal used for the foil, e.g. aluminium, but in practice the same metal foil will always be used so that the factor involved is a constant one.

The parameters of the final temperature to be attained and of the initial dwell, if provided, depend upon the type of carpet being seamed; e.g. carpets of natural fibres will withstand higher seaming temperatures and on highly patterned carpets, the preliminary dwell may be of little value.

Preferably, therefore, these parameters are rendered variable, e.g. by the use of magnetic program cards for the micro-processor which correspond to the characteristics of the fabric being jointed. Apart from ensuring that the heating control is appropriate to the particular fabric, this also gives, where desired, the facility for supervisory control by the issue of the appropriate card.

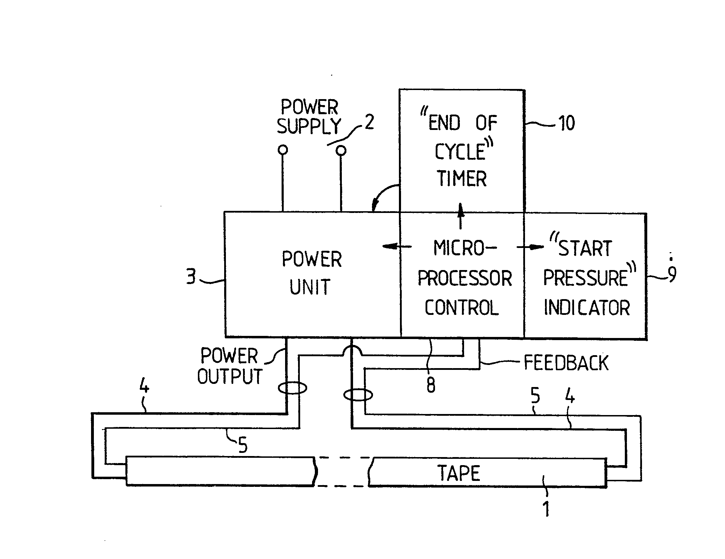

An example of apparatus operating in accordance with the method of the invention will now be described with reference to the accompanying drawing, which is a schematic diagram.

The pieces of carpet or other fabric which are to be jointed are not illustrated, but the tape itself is shown as 1 and is of indefinite length, depending on the size of the pieces of fabric. This tape may, for example, be in accordance with British patent no: 1,328,347, that is to say including a fibrous reinforcement which provides most if not all of the mechanical link between the two pieces of fabric to be joined, a heat-activatable adhesive for fixing the fibrous material to the two pieces of fabric and a metallic foil, for example of aluminium, for generating the necessary heat to activate the adhesive.

Electric current is supplied to the tape 1 from a power supply 2 by way of a power unit 3 which controls the current output. Conductors 4 lead from the output of the unit 3 to the ends of the tape 1. In addition, two feedback conductors 5 enable the potential drop across the tape 1, as a result of the current flowing, to be fed back to a micro-processor 8 which, from the value of the potential drop and on the basis of a predetermined current flowing, computes the electrical resistance of the metallic foil in the tape 1 and hence the temperature of the tape.   When this temperature approaches a value corresponding to full activation of the adhesive, an indication is provided to the operator, e.g. by means of a lamp or audible warning 9.   The operator then presses the tape against the joint between the two pieces of fabric, e. g. by means of a pressing roller, and shortly thereafter the heating current is automatically switched off by a timer 10.

As already mentioned, it is the average temperature along the length of tape which is computed and there will inevitably be at least minor variations of temperature along the length of the tape.   Provided the metal foil is of substantially uniform properties along its length and provided also that reasonably uniform conditions are maintained along the length of the joint at any one time, it is found in practice that variations of temperature along the length of the joint are not excessive and that therefore the computation of the average temperature is quite adequate.   After making allowance for the other parameters referred to above, e.g. the ambient temperature, the type of carpet being seamed and so forth, the micro-processor 8 provides the necessary control to the power unit 3 as previously described.   It is important that the power unit 3 should be capable of responding accurately to control by the micro-processor 8.   A particularly suitable

- 8 -

power source is one with the ability to deliver a constant predetermined current, irrespective of connected load, up to the overall power limit of the source. This provides the facility to use different lengths and widths of tape without upsetting the electrical balance. It does, however, result in a reduced current density in wider tapes with consequently slower heating. To overcome this, the micro-processor may be arranged to monitor also the early rate of temperature rise and to provide a warning if this is unduly slow. The power source then needs to be able to provide a higher current output which can be switched either automatically or manually on the receipt of the warning from the monitor. The primary usefulness of such an arrangement arises from the fact that wider tapes are usually associated with the shorter cross carpet seams so that the power output would not otherwise be fully utilised.

## C L A I M S

1.    A method of jointing pieces of carpet or other similar fabrics by the use of a tape comprising a fibrous reinforcement, a layer of adhesive which can be activated by heat and a strip of metallic foil for generating heat by the passage of an electric current so as to activate the adhesive prior to pressing the tape into contact with the two pieces of fabric  to be joined, in which method electric current is caused to flow along the metallic foil for a length of time which is controlled in accordance with the average temperature reached by the foil as computed from the variation of its electrical resistance.

2.    A method according to claim 1 in which, when the average temperature approaches a value corresponding to full activation of the adhesive, an indication is provided to the operator, and then, after an interval of time sufficient to allow the operator to press the tape against the joint between the two pieces of fabric, the current is automatically switched off.

3.    A method according to claim 1 or claim 2 in which the electrical resistance of the foil is computed from the potential drop across its ends for a predetermined current flow.

4.    A method according to claim 3 in which the value of the current is reduced to a lower, predetermined value at pre-set frequent intervals of short duration and the electrical resistance of the tape is computed from the potential drop during each interval.

5.      A method according to claim 3 or claim 4 in which the potential drop is measured by a separate pair of non-current carrying conductors connected to the main current conductors.

6.      A method according to any one of the preceding claims in which the current is controlled in such a way as to introduce a dwell in the heating for a predetermined period at a reduced temperature to control the dispersion of moisture.

7.      A method according to any one of the preceding claims in which the level of the controlled heating current is selected by a micro-processor in accordance with the parameters of the fabric being jointed.

8.      A method according to claim 7 in which a magnetic program card is used  for the micro-processor, which corresponds to the characteristics of the fabric being jointed.

9.      A method according to claim 7 or claim 8 in which the micro-processor monitors the early rate of temperature rise  to   provide a warning if this is unduly slow.

10.      A method according to claim 9 in which the power source provides a higher current output on receipt of the warning.

///